## Europäisches Patentamt
## European Patent Office
## Office européen des brevets

(11) Publication number: **0 223 462**
A1

# (12) EUROPEAN PATENT APPLICATION

(21) Application number: 86308467.9

(22) Date of filing: 30.10.86

(51) Int. Cl.⁴: **H 04 L 13/00**

(30) Priority: 14.11.85 IT 677963

(43) Date of publication of application: 27.05.87
Bulletin 87/22

(84) Designated Contracting States: CH DE FR GB LI SE

(71) Applicant: Ing. C. Olivetti & C., S.p.A., Via G. Jervis 77, I-10015 Ivrea (Turin) (IT)

(72) Inventor: Tendi, Aldo, via Pavone 14/B, I-10010 Banchette (Turin) (IT)
Inventor: Mosca, Raffaele, Canton Maridon 17, I-10015 Ivre (Turin) (IT)
Inventor: Robino, Sergio, via Vische 3, I-10014 Caluso (Turin) (IT)
Inventor: Straullu, Franco, viale Biella 21, I-10015 Ivrea (Turin) (IT)

(74) Representative: Pears, David Ashley, REDDIE & GROSE 16 Theobalds Road, London WC1X 8PL (GB)

(54) Data processing work station with integrated teletex.

(57) The work station comprises a personal computer (9) to which there is added a board (31) for the Teletex service. This board comprises an additional memory (32) for storing messages, with a back-up battery (52), and a logic means (34) controlled by the CPU (17) of the computer via an interface (33) and bus converter (25). The board is supplied by the power supply (28) of the computer and further comprises a relay (56) which is actuable with a keyboard control (13) to switch off some peripheral units of the computer from the power supply, while preventing the CPU and the added board from being switched off. The work station is equipped with a multiasking operating system which makes it possible for a processing program and a Teletex service program to be executed concurrently.

6B28268

## DATA PROCESSING WORK STATION WITH INTEGRATED TELETEX

The present invention relates to a work station for data processing, which is integrated with a terminal for Teletex service, as defined in the preamble of claim 1.

As is known, the Teletex service which has recently been offered by various postal administrations complies with a series of standards which are approved by the committee known as CCITT, and permits the transmission of messages at high speed (2400 baud or higher) either on the telephone network or on a data transmission network of circuit switching or packet switching type. The Teletex service permits compatibility as between the normal operating stations such as typewriters, word processing systems, personal computers and so forth, and the message transmission stations inasmuch it makes it possible to transmit a text over a distance, while respecting the format, symbols, layouts and graphics thereof.

It has already been proposed that an office work station, for example a word processing machine, might be adapted for Teletex service by means of an additional piece of equipment. That solution is generally found to be very expensive.

A personal computer integrated with a terminal for Teletex service has also been proposed. That terminal comprises a central processing unit and its own power supply, whereby the Teletex service can be performed simultanously with the other processing operations of the computer. Integration of the two items of equipment is reduced in that way to a few peripheral units in common and to the common housing while the cost of the work station is again rather high.

The object of the present invention is to provide a work station which is integrated with a terminal for Teletex service, which is of limited cost while permitting a wide range of processing applications, simultaneously with the Teletex service.

The invention accordingly provides a work station as defined by the characterising portion of claim 1.

The invention will be described in more detail, by way of example, with reference to the accompanying drawings, in which:

Figure 1 is a general diagrammatic view of a work station embodying the invention,

Figure 2 is a block circuit diagram of the station shown in Figure 1,

Figure 3 is a detailed diagram of the circuits of the terminal for the Teletex service,

Figure 4 is a general diagrammatic view of the structure of the programs of the station, and

Figure 5 is a flow chart of the operations relating to functioning of the station.

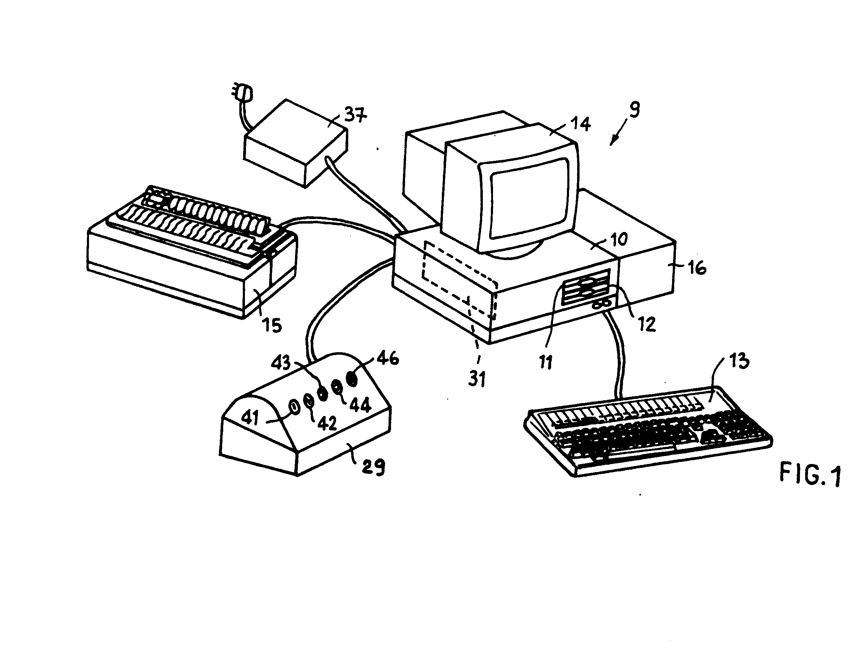

Referring to Figure 1, reference numeral 9 generally denotes a personal computer (PC), for example the PC M24 produced by the present applicants. The PC 9 comprises a housing 10 containing circuits and other components, including a floppy disc unit (FDU) 11 for the programs and a hard disc unit (HDU) 12 for data recording. The PC 9 further comprises an alphanumeric keyboard 13 for the input of data, texts, instructions and commands, and a page VDU 14. The PC 9 may also have connected thereto a serial printer 15 of any known type, for printing texts and graphics, and an external magnetic disc unit, for example a hard disc unit (HDU) as indicated at 16.

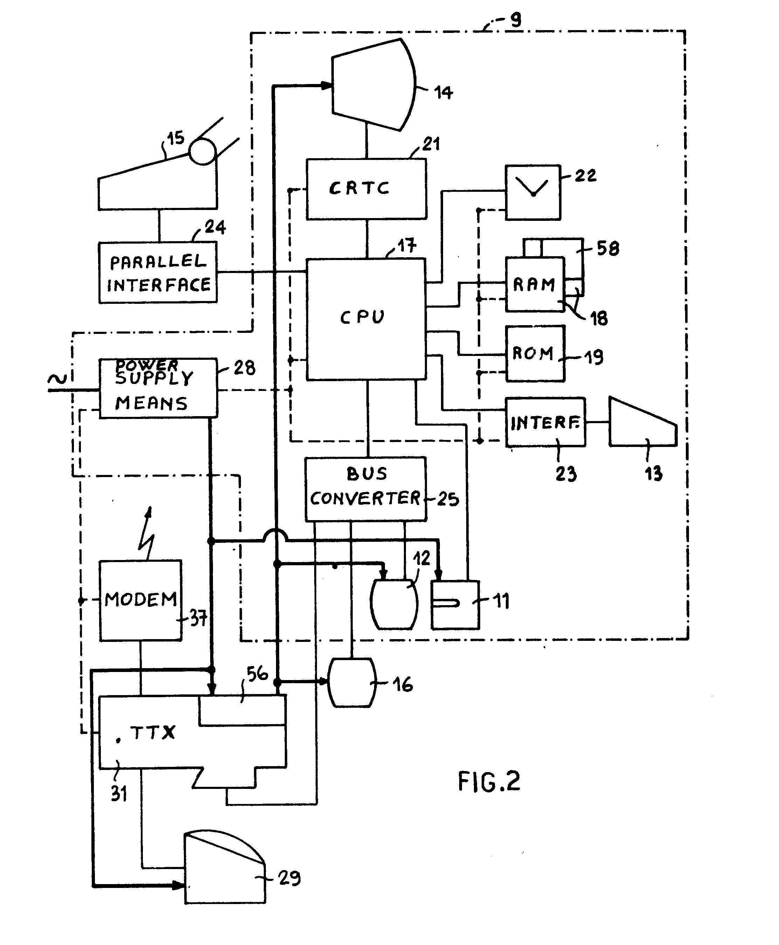

In particular, the PC 9 comprises a central processing unit (CPU) 17 (Figure 2) comprising a 16 bit microprocessor, for example the Intel 8086 microprocessor produced by Intel Corporation. The CPU 17 is connected to a 256 K working memory (RAM) 18 for data and programs, a read only memory (ROM) 19 for the firmware and other constant data of the computer. The CPU 17 is also connected to a control circuit (CRTC) 21 of the VDU 14, and to a clock 22 which makes it possible for date, time and/or time intervals to be automatically inserted into texts and into the processing operations. The CPU 17 is also connected to an interface 23 for the keyboard 13 and to a parallel interface 24 for the printer 15. The PC 9 also comprises a bus converter 25 to permit connection to a series of standard 8 bit peripheral units such as the disc units 12 and 16.

Finally, the PC 9 comprises a power supply circuit 28 operable to provide a first voltage for the logic units, by way of the connections indicated in broken lines in Figure 2, and an actuating voltage for the input/output units, by way of the connections shown in solid lines. The printer 15 however is provided with its own power supply, (not shown).

The PC 9 is provided with an operating system which permits a series of application programs to be executed. For example the operating system may comprise the MS-DOS system from the Microsoft Corporation, which makes it possible to execute application programs for word processing, image processing, compilers etc, whereby the PC 9 can be considered as a multifunctional work station.

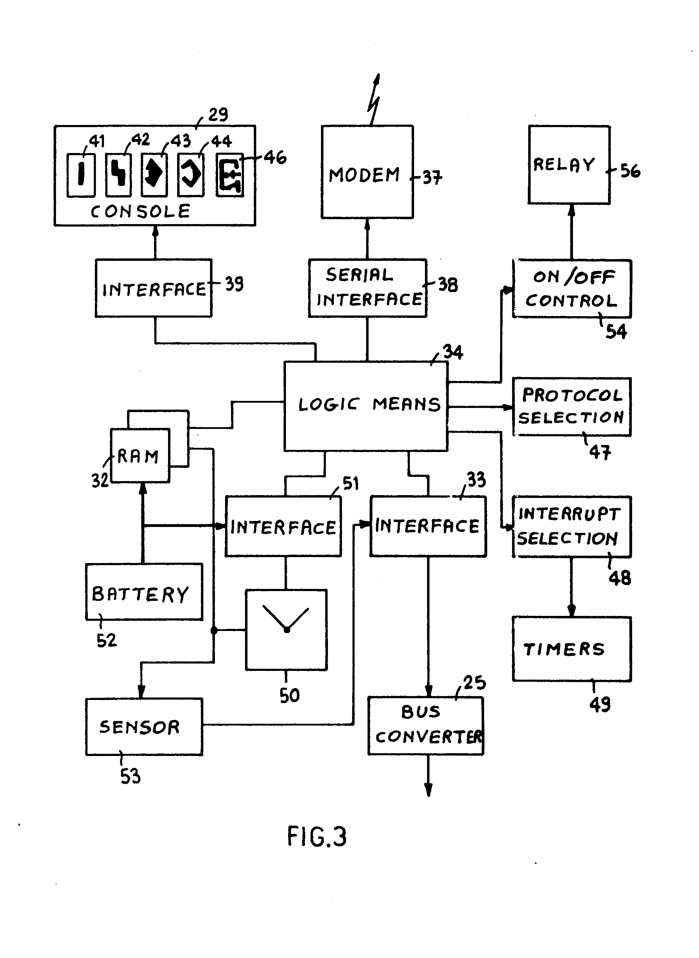

The PC 9 is integrated with an apparatus for the Teletex service, by means of the addition of a console 29 indicated on an enlarged scale in Figure 1, for the light signals provided by that service, and an electronic board TTX 31 which is fitted within the casing 10, as indicated in broken lines in Figure 1. The board 31 essentially comprises an additional read-write memory (RAM) 32 (see Figure 3) with a capacity of 64 K, of C-MOS type. The RAM 32 is connected to the CPU 17 (Figure 2) by way of the converter 25, an interface 33 (Figure 3) and a logic control circuit 34. The latter is also connected to a modem 37 by way of a serial interface 38, for example of type V 22, X 25 or X 21, as provided for by the CCITT standards. The interface 38 comprises a serializer, a baud rate generator to define the transmission rate, a time-out generator for defining predetermined intervals of time, required by the transmission protocol, and an electrical interface to the modem 37.

The CPU 17, by way of the circuit 34, controls the RAM 32 both for exchange of data with the RAM 18 and for passing messages on the line or receiving messages from the line, by way of the modem 37 and the serial interface 38. The logic unit 34 is also connected by means of an interface 39 to the console 29 to permit the CPU 17 (Figure 2) to provide control for the latter in such a way as to display the operating conditions of the Teletex communication. In particular the console 29 comprises an LED 41 (Figure 3) which, when it is lit, indicates that the terminal is in operation, that is to say, is in its ON state, thereby giving a visual indication of the state of the general switch of the apparatus. The console 39 further comprises an LED 42 for indicating a malfunction in the terminal. The diagnostic information is displayed under the control of the CPU 17 (Figure 2) at the video 14.

Another LED 43 of the console 29 (Figure 3) indicates the condition of occupation of the memory 32. It begins to flash when there are only sixteen Kbytes of RAM 32 that are still free, and remains lit when there are only four Kbytes of RAM 32 that are still free. In such a case both the reception of fresh messages and the storing of messages to be transmitted are inhibited until the RAM 32 is at least partially freed. Another LED 44 at the console 29 indicates that a message has been received from the line in the RAM 32. It remains lit until the operator acknowledges receipt of the message and commands printing at the printer 15. Finally an LED 46 flashes whenever there is line modulation due to the transmission or reception of a message.

The board 31 further comprises a selection circuit 47 of the connection type, which is connected to the logic circuit 34 and which is set up, for example by means of jumpers, for the type of network to which the modem 37 is to be connected, such as for example: the public switched telephone network (PSTN), the circuit switching data network (CSDN), or the packet switching data network (PSDN). Alternatively the circuit 47 may be of logic type which is capable of being set up for the selection of the type of network by the CPU 17 (Figure 2), in executing a command and data input at the keyboard 13.

The board 31 further comprises a logic interrupt selection circuit 48 (Figure 3) connected to a series of timers 49, to permit the CPU 17 to manage the Teletex service program simultaneously with a local processing program, as will be seen in greater detail hereinafter. The board 31 also comprises a clock circuit 50 which is connected to the circuit 34 by way of an interface 51, whereby the clock 50 is independent of the clock 22 (see Figure 2) of the PC 9.

Finally, the board 31 comprises a back-up battery 52 (Figure 3) for supplying the RAM 32 and the block 49, in the event of an accidental interruption in the voltage of the supply means 28 (Figure 2), as prescribed by the standards of the Teletex service. A sensor 53 (see Figure 3) for sensing the feed voltage supplied by the supply means 28 serves to exclude writing in the RAM 32 or the clock 49 while there is no power supply.

As is known, the Teletex service must be continuously active in order to be able to receive messages even in the absence of the operator.    The input/output peripheral units of the PC 9 (Figure 2) such as the VDU 14 and the disc units 12 and 16 may be turned off when the PC 9 is not executing processing programs.    The program disc unit 11 and the keyboard 13 must however remain constantly switched on.    Turning off the peripheral units makes it possible enormously to extend the life of the peripheral units and thus the working station.

For that purpose, the board 31 comprises a logic ON-OFF control circuit 54 (Figure 3) which is capable of operating a relay 56 in response to instructions or commands input at the keyboard 13.    The relay 56 is operable to connect and disconnect some units of the PC 9 to and from the supply means 28 (Figure 2) whereby when the work station operates exclusively as a Teletex terminal, it prevents the other units which are essential for the Teletex service from being disconnected from the supply means 28.

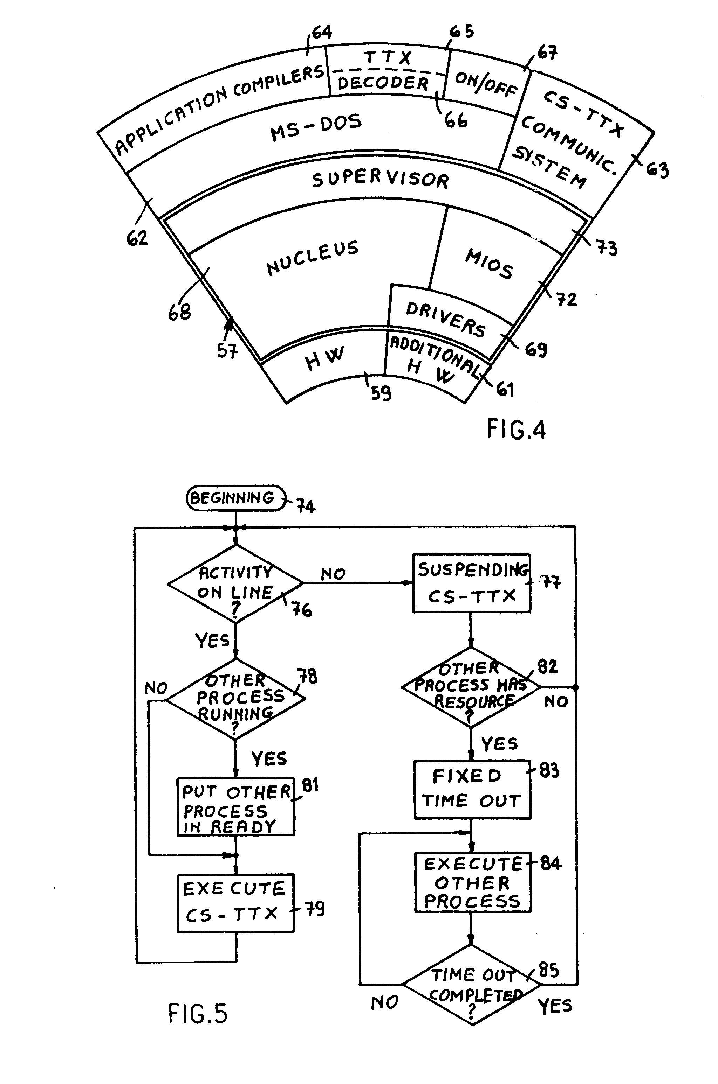

In particular when the operator operates the OFF command at the keyboard 13, the CPU 17 conditions the circuit 54 in such a way as to open the relay 56 whereby the supply means 28 is disconnected from the HDUs 12 and 16 and the VDU 14, while the CPU 17, the RAM 18, the keyboard 13, the circuits of the board 31 and the console 29 are still supplied with power.    The console 29 thus continues to provide a visual indication of the state of the Teletex service while the keyboard 13 remains in a condition of awaiting input.    If under those conditions the operator operates a program call code, the CPU 17 conditions the circuit 54 to close the relay 56 whereby all the units of the work station are reconnected to the supply means 28.    If the VDU 14 has its own manual ON-OFF switch, following the input of OFF, a message is displayed which invites the operator to turn off the video.    For simultaneous execution of one of the local processing programs which are run for example by the operating system MS-DOS and the program for running the Teletex service (CS-TTM), the working station is provided with a telematique operating system (TEOS) represented by the sector defined by a double line in Figure 4 and indicated generally by reference 57.    It is held together with the CS-TTM, on a floppy magnetic disc or on the hard disc of the unit 16 (Figure 2) and is loaded by means of the disc unit into a zone 58 of the RAM 18 (Fig. 2).  The TEOS 57 (Figure 4) acts directly on the hardware of the working station, which comprises both the hardware 59 of the PC 9 and the additional hardware 61 carried by the board 31.

The TEOS is a multitasking operating system capable of operating the operating system MS-DOS in real time, as one of the tasks or processes, as indicated at 62 in Figure 4, while another process is represented by the CS-TTX, as indicated at 63.  As already indicated, a series of application programs as generally indicated at 64 may rely on the MS-DOS system 62, which programs comprise data, word or graphic processing programs, compilers etc, which can be executed locally in the PC 9.  A program TTX 65 for managing commands for accessing the Teletex service may also rely on the MS-DOS system 62.  The program 65 comprises a module 66 for transcoding the texts from the format required by local processing to the format required by the Teletex service.  Finally, a program 67 for controlling the logic ON-OFF control circuit 54 (Figure 3) also relies on the MS-DOS system 62.

The TEOS system 57 (Figure 4) comprises a nucleus 68 which represents the central body of the operating system, by way of which the other system bodies and processes are capable of operating.  The nucleus 68 controls access to the various resources of the working station (memories and peripherals) by the various processes.  The nucleus 68 is thus occupied with creating the processes, assigning thereto by means of the CPU 17 the various resources that they require.  It manages the queues in the situation where two or more processes require the use of a resource which cannot be shared.  It also governs the semaphores by way of which the processes can be synchronised with each other and with external events.  In addition the nucleus 68 governs messages, supplying the processes with the instructions by way of which they can communicate with each other to exchange information or to synchronise their activities.  Finally the nucleus 68 activates the timers 49 (Figure 3) of the board 31, to permit the processes to wait for events for a given time and controls the buffers in which the characters received are stored, on a 'first in first out' (FIFO) basis.

The TEOS 57 (Figure 4) further comprises a system driver module 69 which contains all the routines dependent on the hardware 61, on which the operating system is based. In particular it permits the nucleus to input and read the data and the time and to have a base timer for governing the sequence of the processes.

The TEOS 57 further comprises a module MIOS 72 which governs all the peripherals of the working station. It thus receives all the input/output (I/O) calls and provides for executing them, relying on the drivers 69 which execute the I/O at a physical level. The MIOS 72 also governs congruence of the data with the availability of the RAM 32 (Figure 3) and the maintenace of such data even in the event of an interruption in the power supply.

Finally the TEOS 57 (see Figure 4) comprises a supervisor module 73 which governs conflict of the various processes at the resources and, in conjunction with the nucleus 68, is capable of putting such processes into a condition of communicating and synchronising by means of the interrupts between each other and with external events, in the event that the functions thereof are not completely independent.

In particular each process may be in one of the following three states:

RUNNING if the process disposes of all the resources it requires including the CPU. At any single time there is a single RUNNING process insofar as the CPU resource is not sharable.

READY if the process disposes of all the resources it requires excluding the CPU. It will go to running as soon as the higher priority processes are suspended, waiting for resources.

SUSPENDED if the process is awaiting some resource which is not available at the present time (for example peripherals, data, messages, etc.).

The various processes are governed by means of a cyclic routine of the nucleus 68 (Figure 4) and the supervisor 73. The beginning 74 (Figure 5) of the routine comprises the request of the process of the communication system CS-TTX, which has the highest priority. A selection step 76 is effected firstly, to establish if there is activity to be done on line. In the negative situation, an operation 77 for suspending the process CS-TTX is effected, whereby control passes to a local processing process. If however the outcome of the selection operation 76 is positive, another selection operation 78 is carried out to establish if there is another process in a Running state. If the outcome of that selection operation is negative, an operation 79 is effected, relative to the process CS-TTX, which thus becomes Running, until it is completed. The operation 79 is followed by a fresh selection operation 76. If the outcome of the selection operation 78 is positive, with an operation 81, the state of the other process is put into Ready and thus the operation 79 is executed.

Whenever the other process is in a condition of waiting for operation and there is no activity on line, the operation 77 is followed by a selection operation 82 to establish if the other process has all the resources available. If the outcome of the selection operation 82 is negative, the selection 76 is again effected. If however the outcome of the selection operation 82 is positive, an operation 83 is carried out, in which the time out for the local processing process is fixed, since that process can be carried out in a time sharing mode with any other local processes. The operation 83 is followed by an operation 84 for executing the other process. A selection operation 85 continuously detects the state of the time out and until it is completed, repeats the operation 84. When the outcome of the selection operation becomes positive, control again passes to the process CS-TTX and the selection operation is again effected at 76.

It will be appreciated that various modifications and improvements may be made in the above-described apparatus without departing from the scope of the invention. For example the hard disc unit 12 may be replaced by a second floppy disc unit. Furthermore the system MS-DOS may be replaced by any other operating system. Finally the local processing processes may be executed with a queue mode, in accordance with priorities and time outs which are predetermined for each process.

CLAIMS:

1. A work station for data processing, which is integrated with a terminal for Teletex service, comprising a personal computer (9) including a central processing unit (17), a video display unit (14), a keyboard (13), a memory (18) for data and processing programs and a power supply (28), the station comprising for the Teletex service an additional memory (32) for storing the messages received or to be transmitted, a modem (37) for connection to the line and a logic control unit (34) for the memory and modem, characterised in that the memory (18) for data and programs comprises a zone (63) for storing a program for the Teletex service, and in that the logic control unit (34) and the additional memory (32) are supplied by the said power supply (28) and are controlled by the central processing unit (17) in execution of the program for the Teletex service simultaneously with execution of the processing program.

2. A work station according to claim 1, characterised by a control unit (54) for a relay (56) which is actuable in response to a command, for disconnecting the power supply (28) from some peripheral units of the computer (9) and for preventing switching off of at least the central processing unit (17) and the data and program memory (18).

3. A work station according to claim 1 or 2, wherein the central processing unit (17) operates with words of at least two bytes and in which there is provided a bus converter (25) for connecting at least one single-byte peripheral unit to the central processing unit, characterised in that the logic control unit (34) and the additional memory (32) are connected to the bus converter (25).

4. A work station according to any of the preceding claims, characterised in that the program (63) for the Teletex service is executed with maximum priority with respect to the local processing programs, the processing programs being executed by the central

0223462

processing unit (17) in accordance with a predetermined time divider.

5.   A work station according to claim 4, characterised in that the program (63) for the Teletex service is executed under the control of a telematique operating system program capable of managing it concurrently with the processing programs.

6.   A work station according to claim 5, characterised by a clock (50) for the logic control unit (34), which is independent of the clock (22) of the computer, a program module being capable of controlling, together with the first said clock, recording, transmission and reception of messages in the additional memory (32).

7.   A work station according to claim 5 or 6, characterised in that the local processing programs comprise a module (65, 66) for transcoding messages recorded by means of a processing program into a message suited for the Teletex service and vice-versa.

FIG.1

FIG.2

FIG.3

0223462

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | ERICSSON REVIEW, vol. 59, no. 4, 1982, pages 194-202, Stockholm, SE; T. AUGUSTINSSON et al.: "ERITEX 10 for teletex and word processing" * Page 194, right-hand column, lines 3-20; page 195, right-hand column, line 1 - page 196, right-hand column, line 13; page 198, left-hand column, line 23 - page 199, left-hand column, line 19; page 200, left-hand column, lines 48-55, right-hand column, lines 21-26 * | 1,4,5 7 | H 04 L 13/00 |
| A | ELECTRICAL DESIGN NEWS, vol. 29, no. 15, July 1984, pages 288-292, Boston, Massachusetts, US; B. NICHOLSON: "Emerging telecomm scheme to standardize electronic mail" * Page 290, right-hand column, line 24 - page 292, line 8 * | 1 | |
| A | TELCOM REPORT, vol. 3, no. 2, April 1980, pages 110-116, Munich, DE; L. LUTZ et al.: "Textstationen für den Teletexdienst" * Page 112, right-hand column, lines 21-35 * | 1,2 | |

TECHNICAL FIELDS SEARCHED (Int. Cl.4)

H 04 L

--- -/-

The present search report has been drawn up for all claims

| Place of search | Date of completion of the search | Examiner |
|---|---|---|
| THE HAGUE | 17-02-1987 | MIKKELSEN C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

0223462

European Patent Office

**EUROPEAN SEARCH REPORT**

Application number

EP 86 30 8467

| DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl.4) |
|---|---|---|---|
| A | PROCEEDINGS OF THE SIXTH INTERNATIONAL CONFERENCE ON COMPUTER COMMUNICATION, London, 7th-10th September 1982, pages 412-417, North-Holland Publishing Co., Amsterdam, NL; A.H. ITHELL: "A powerful teletex workstation: design and facilities" * Paragraphs 3,5.1,5.2 * | 1,4-6 | |
| A | EP-A-0 062 107 (SIEMENS) * Page 2, lines 29-34; page 4, lines 32-35; page 5, line 25 - page 7, line 33; page 14, lines 3-7 * | 1,4,5 | |
| A | EP-A-0 023 568 (IBM) * Abstract * | 3 | TECHNICAL FIELDS SEARCHED (Int. Cl.4) |

The present search report has been drawn up for all claims

| Place of search | Date of completion of the search | Examiner |
|---|---|---|
| THE HAGUE | 17-02-1987 | MIKKELSEN C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82